# EUROPÄISCHE PATENTSCHRIFT

(11) **EP 1 744 979 B1**
(45) Veröffentlichungstag und Bekanntmachung des Hinweises auf die Patenterteilung: **11.02.2009**
(21) Anmeldenummer: 05728240.2
(22) Anmeldetag: 03.03.2005
(51) Int. Cl.: B65G 47/91, B25J 15/06, B66C 1/02

(54) **SAUGVORRICHTUNG UND DAMIT AUSGESTATTETE HANDHABUNGSVORRICHTUNG**
SUCTION MECHANISM, AND HANDLING DEVICE EQUIPPED THEREWITH
DISPOSITIF D'ASPIRATION ET DISPOSITIF DE MANIPULATION EQUIPE D'UN TEL DISPOSITIF

(30) Priorität: 13.04.2004 DE 102004017898
(43) Veröffentlichungstag der Anmeldung: 24.01.2007
(73) Patentinhaber: FESTO AG & Co. KG, 73734 Esslingen (DE)
(72) Erfinder: SCHÖTTNER, Michael, 73240 Wendlingen (DE)
(74) Vertreter: Bregenzer, Michael
(86) Internationale Anmeldenummer: PCT/EP2005/002225
(87) Internationale Veröffentlichungsnummer: WO 2005/105628

(56) Entgegenhaltungen:
- EP-A- 1 477 439
- DE-A1- 4 005 514
- DE-A1- 10 009 167
- DE-C- 900 562
- GB-A- 741 672
- US-A- 5 244 242

## Beschreibung

Die Erfindung betrifft eine Saugvorrichtung mit mindestens einem mit Unterdruck beaufschlagbaren Haltekopf und mit einer Unterdruckerzeugungseinrichtung zum Erzeugen des Unterdruckes in einem Ansaugbereich des mindestens einen Haltekopfs, wobei ein Gegenstand durch den Unterdruck an den mindestens einen Haltekopf angesaugt wird. Die Erfindung betrifft ferner eine damit ausgestattete Handhabungsvorrichtung.

Aus der deutschen Patentschrift DE 900 562 C ist eine Saugvorrichtung gemäß dem Oberbegriff des Anspruchs 1 bekannt, bei dem ein Elektromagnet einen Permanentmagneten in einer Druckerzeugerkammer betätigt, um so an einem unten angeordneten Saugmundstück einen Unterdruck zu erzeugen. Der Elektromagnet arbeitet in einer Richtung. Zu einer Betätigung in Gegenrichtung ist eine Feder vorgesehen.

Ein ähnliches Antriebsprinzip ist in der EP 1 477 439 A1 gezeigt, wo ebenfalls im oberen Bereich eines Hebe- bzw. Druckzylinders ein Elektromagnet angeordnet ist, der auf einen Saugkolben oder Zylinderkolben wirkt.

In der deutschen Patentanmeldung 25 49 514 sind Saugvorrichtungen erläutert, die Unterdruckerzeugungseinrichtungen enthalten. Die Saugvorrichtungen sind an einem Förderband befestigt und dienen zum Ansaugen und Weiterfördern von Bechern. Die Saugvorrichtungen und somit auch die Unterdruckerzeugungseinrichtungen werden durch von außen angreifende mechanische Kräfte betätigt, nämlich durch Steuerschienen, die in Nuten an den Unterdruckerzeugungseinrichtungen eingreifen und somit einen Haltekopf relativ zu einem Basisteil der Saugvorrichtung bewegen. Durch die Relativbewegung wird eine Unterdruckkammer im Innern der Saugvorrichtung verkleinert und somit in einem mit der Unterdruckkammer durch Kanäle verbundenen Ansaugbereich des Haltekopfs ein Unterdruck zum Ansaugen eines Gegenstandes, im konkreten Fall eines Bechers, erzeugt.

Nun ist es in vielen Anwendungsfällen nicht möglich, dass mechanische Kräfte von außen an Saugvorrichtungen angreifen. Häufig verwendet man dann pneumatische Saugvorrichtungen, bei denen eine von der Saugvorrichtung abgesetzte pneumatische Vakuumerzeugungsvorrichtung den Unterdruck erzeugt. Die Saugvorrichtung und die Vakuumerzeugungsvorrichtung sind mittels eines oder mehrerer Druckluftschläuche verbunden. Derartige Schläuche behindern jedoch den Bewegungsspielraum der Saugvorrichtung, insbesondere dann, wenn sie einen Bestandteil einer Handhabungsvorrichtung bildet. Ferner ist das zusätzliche Aggregat in Gestalt der Vakuumerzeugungsvorrichtung notwendig.

In der DE 101 50 126 A1 ist eine Saugvorrichtung beschrieben, bei der ein piezo-elektrischer Biegewandler einen zum Ansaugen eines Gegenstandes durch einen Haltekopf erforderlichen Unterdruck erzeugt. Die Haltekräfte sind allerdings sehr gering, weil der Biegewandler lediglich einen geringen Unterdruck erzeugen kann.

Aus der Patentschrift DD 227 196 A1 ist eine Kolben-Linearmotor-Pumpe bekannt, die im Pumpen- bzw. Verdichterbau verwendet wird. Die Pumpe enthält eine Zylinderwandung mit Wicklungen eines elektrischen Linearmotors zum Antrieb eines Verdichterkolbens in dem Zylindergehäuse. An die Druckpumpe können Druckleitungen angeschlossen serin.

Das US Patent 5,609,377 betrifft eine Vakuum-Saugvorrichtung mit einer Vielzahl von Saugköpfen, die zentral durch eine Vakuumpumpe mit Unterdruck beaufschlagbar sind. Zu jedem Saugkopf führt eine Druckleitung der Vakuumpumpe bzw. eines Vakuumverteilers.

Es ist daher die Aufgabe der vorliegenden Erfindung, eine flexibel einsetzbare Saugvorrichtung mit verhältnismäßig großen, einstellbaren Saugkräften bereitzustellen. Ferner soll eine-mit einer derartigen Saugvorrichtung ausgestattete Haltevorrichtung bereitgestellt werden.

Zur Lösung der Aufgabe ist eine Saugvorrichtung gemäß Anspruch 1 vorgesehen. Zur Lösung der Aufgabe ist ferner eine mit einer erfindungsgemäßen Saugvorrichtung ausgestattete Handhabungsvorrichtung vorgesehen.

Der Lineardirektantrieb weist eine Erreger-Spulenanordnung auf, die entsprechend der Bewegungsrichtung des Läufers aneinandergereihte Spulen enthält. Durch sequentielles Bestromen der Spulen wird der Läufer in der gewünschten Bewegungsrichtung angetrieben, bei der er beispielsweise Unterdruck im Ansaugbereich des Haltekopfs erzeugt.

Die erfindungsgemäße Saugvorrichtung baut kompakt. Zur elektrischen Stromversorgung oder Steuerung benötigt sie zwar elektrische Leitungen, die aber wesentlich flexibler sind als beispielsweise Druckluftschläuche. Eine zentrale, separate Druckerzeugungsvorrichtung ist nicht erforderlich. Der Lineardirektantrieb kann auf verhältnismäßig einfache Weise gesteuert und/oder geregelt werden, sodass die Druckverhältnisse im Ansaugbereich des Haltekopfs einfach beeinflussbar sind. Der Lineardirektantrieb stellt verhältnismäßig große Antriebskräfte bereit, sodass große Ansaugkräfte möglich sind. Es können dementsprechend verhältnismäßig schwere Gegenstände angesaugt werden. Gegenüber einem piezoelektrischen Antrieb sind die Antriebskräfte eines Lineardirektantriebes wesentlich größer. In Abhängigkeit der benötigten Druckverhältnisse bzw. Ansaugkraft kann der Verstellweg des Läufers bzw. Druckkolbens entsprechend lang ausgelegt sein.

Weitere vorteilhafte Ausgestaltungen der Erfindung ergeben sich aus den abhängigen Ansprüchen sowie aus der Beschreibung.

Der Haltekopf und die Unterdruckerzeugungseinrichtung sind zweckmäßigerweise axial hintereinander angeordnet. Dies ermöglicht optimale Strömungsverhältnisse.

Der Haltekopf begrenzt vorteilhafterweise eine Unterdruckkammer der Unterdruckerzeugungseinrichtung, wenn er einen Gegenstand ansaugt. Der Läufer bzw. Druckkolben dient zur Vergrößerung bzw. Verkleinerung des Volumens der Unterdruckkammer, sodass die Druckverhältnisse im Ansaugbereich des Haltekopfs durch Verstellen des Läufers bzw. Druckkolbens beeinflussbar sind.

Die Unterdruckerzeugungseinrichtung und der Haltekopf bilden zweckmäßigerweise eine integrale Baueinheit. Beispielsweise ist die Unterdruckerzeugungseinrichtung in einem Gehäuse der Saugvorrichtung angeordnet, an dem der Haltekopf angebracht ist. Der Haltekopf ist zweckmäßigerweise lösbar an der Saugvorrichtung bzw. an deren Gehäuse befestigt, beispielsweise geschraubt, geklemmt oder dergleichen. Dadurch ist es z.B. möglich, einen durch Gebrauch verschlissenen Haltekopf auszuwechseln bzw. einen für die jeweiligen Verhältnisse optimalen Haltekopf an der Saugvorrichtung anzuordnen. Der Haltekopf besteht vorzugsweise aus flexiblem Material, beispielsweise Kunststoff, Weichpolymer oder dergleichen. Es versteht sich, dass auch Verstärkungselemente im Haltekopf enthalten sein können.

Der Läufer des Lineardirektantriebes ist vorteilhafterweise in zwei zueinander entgegengesetzten Richtungen antreibbar. In einer Richtung erzeugt er Unterdruck im Bereich des Haltekopfs. In entgegengesetzter Bewegungsrichtung sorgt er für ausgeglichene Druckverhältnisse im Ansaugbereich des Haltekopfs, sodass ein durch den Haltekopf angesaugter Gegenstand freigegeben wird. Besonders bevorzugt ist es aber, dass der Läufer bei dieser zweiten Bewegung Überdruck im Ansaugbereich des Haltekopfs erzeugt, sodass ein angesaugter Gegenstand vom Haltekopf abgestoßen wird, sozusagen weg- oder abgeblasen wird.

Vorzugsweise ist ein Auslass an der Unterdruckerzeugungseinrichtung bzw. an der Saugvorrichtung vorhanden, durch den Druckluft beim Erzeugen von Unterdruck auf Seiten des Haltekopfs ausgestoßen werden kann. Dieser Auslass befindet sich zweckmäßigerweise an der dem Haltekopf entgegengesetzten Seite der Saugvorrichtung. Der Läufer bzw. der Druckkolben kann dementsprechend durch diesen Auslass Luft ausstoßen, wenn er den Unterdruck im Ansaugbereich des Haltekopfs erzeugt.

Zwischen einer Unterdruckkammer der Unterdruckerzeugungseinrichtung und dem Ansaugbereich des Haltekopfs sind vorteilhafterweise einer oder mehrere Verbindungskanäle vorhanden.

Besonders bevorzugt ist, wenn der Leitungsquerschnitt des Verbindungskanals möglichst groß ist, um Strömungsverluste möglichst gering zu halten. Die Unterdruckkammer kann prinzipiell den Ansaugbereich des Haltekopfs sozusagen integral bilden.

Der Läufer des Lineardirektantriebs ist vorteilhafterweise durch einen Permanentmagneten gebildet oder enthält eine Permanentmagnetanordnung. Es versteht sich, dass prinzipiell auch ein elektrisch erregter Läufer möglich ist.

Wie bereits erläutert, sind bei dem elektrischen Lineardirektantriebsprinzip vielfältige Steuerungsmöglichkeiten und Regelungsmöglichkeiten gegeben. Dem Lineardirektantrieb.ist daher zweckmäßigerweise eine Steuereinrichtung zugeordnet. Die Steuereinrichtung bildet vorteilhafterweise zumindest teilweise einen Bestandteil der erfindungsgemäßen Saugvorrichtung. In der Steuereinrichtung zum Steuern des Lineardirektantriebes ist vorteilhafterweise eine Regelungseinrichtung enthalten. Die Regelungseinrichtung dient zweckmäßigerweise zur Kraftregelung des Lineardirektantriebes, sodass auf diesem Wege die Druckverhältnisse im Ansaugbereich des Haltekopfes regelbar sind. Die Regelungseinrichtung steuert den Lineardirektantrieb vorteilhafterweise zum Ausgleich einer Leckage im Bereich des Haltekopfes an. Beispielsweise können zwischen dem aufzunehmenden Gegenstand und dem Haltekopf Undichtigkeiten auftreten, beispielsweise wenn eine Kontaktoberfläche des Gegenstandes, an der der Haltekopf angreift, rau, uneben oder dergleichen ist.

Vorteilhafterweise ist bei der Saugvorrichtung mindestens ein Drucksensor vorhanden, der den Druck im Ansaugbereich des Haltekopfs erfassen und zweckmäßigerweise der erfindungsgemäßen Steuereinrichtung bzw. Regelungseinrichtung Druckmesswerte übermitteln kann. Der Drucksensor kann unmittelbar im Bereich des Haltekopfs, aber auch in einer Unterdruckkammer der Unterdruckerzeugungseinrichtung angeordnet sein. Anhand der durch den Drucksensor gemeldeten Druckmesswerte ist die Regelungseinrichtung in der Lage, konstante oder im Wesentlichen konstante Druckverhältnisse im Ansaugbereich des Haltekopfs durch entsprechende Ansteuerung des Lineardirektantriebes herzustellen. Es versteht sich, dass alternativ oder in Ergänzung zu einem Drucksensor auch Kraftsensoren, insbesondere im Bereich des Haltekopfs, vorgesehen sein können. Mit derartigen Kraftsensoren ist die entsprechende Ansaugkraft, mit der ein Gegenstand an den Haltekopf angesaugt ist, erfassbar. Anhand der jeweiligen Kraftmesswerte ist der elektrische Lineardirektantrieb steuerbar und/oder regelbar.

Die erfindungsgemäße Handhabungsvorrichtung, die eine oder mehrere erfindungsgemäße Saugvorrichtungen aufweist, enthält beispielsweise einen oder mehrere Linearantriebe und/oder einen oder mehrere Rotationsantriebe, um die Saugvorrichtung(en) zu positionieren. Die Positionierantriebe sind beispielsweise fluidtechnisch, insbesondere pneumatisch, betrieben. Besonders bevorzugt ist jedoch eine ausschließlich elektrische Variante, bei der der oder die Positionierantriebe elektrisch betreibbar sind. Die Saugvorrichtung(en) sind beispielsweise an dem oder den Abtriebsteilen einer Positionier-Antriebseinheit angeordnet.

Nachfolgend wird ein Ausführungsbeispiel der Erfindung anhand der Zeichnung näher erläutert. Es zeigen:
- Fig. 1: eine erfindungsgemäße Handhabungsvorrichtung mit einer erfindungsgemäßen Saugvorrichtung in schema- tischer, teilweise geschnittener Därstellung,
- Fig. 2: die Handhabungsvorrichtung gemäß Fig. 1 in einer schematischen perspektivischen Ansicht, und

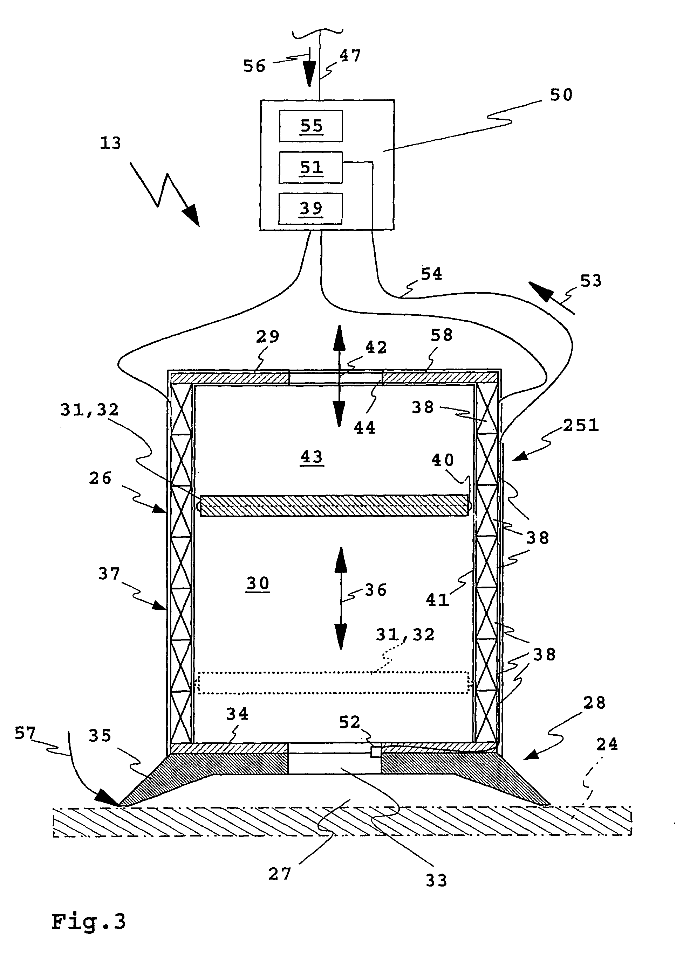

- Fig. 3: eine Querschnittsansicht der Saugvorrichtung gemäß Fig. 1 und 2.

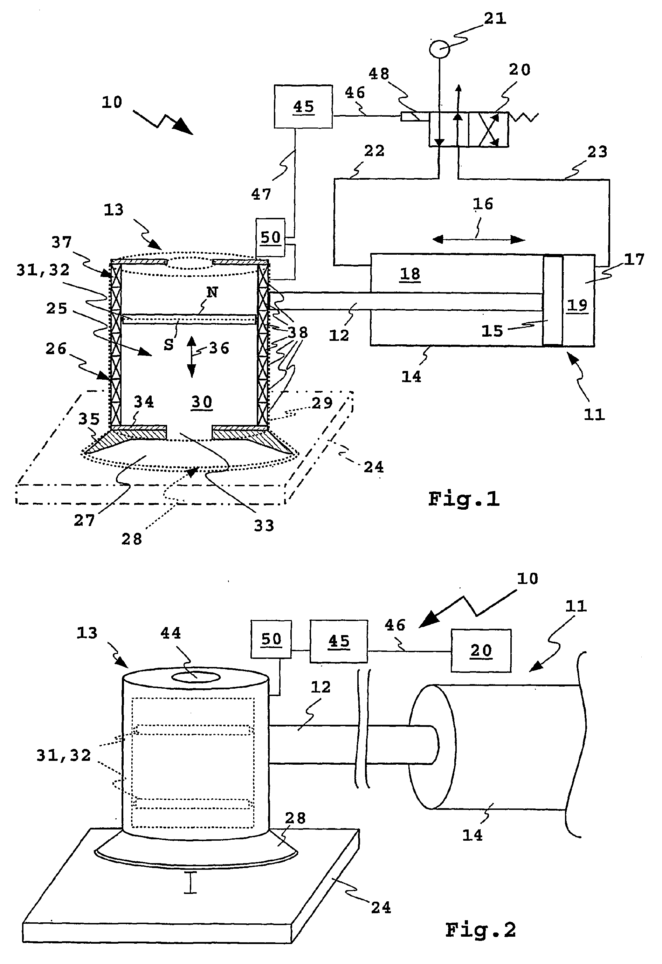

Eine in den Fig. 1 und 2 gezeigte Handhabungsvorrichtung 10 weist eine Positionier-Antriebseinheit 11 auf, an deren Abtriebsteil 12 eine Saugvorrichtung 13 angeordnet ist. Die Antriebseinheit 11 ist ein Linearantrieb. Die Antriebseinheit 11 ist im vorliegenden Fall fluidtechnisch, beispielsweise pneumatisch, betreibbar, wobei alternativ eine elektrische Bauform möglich ist. Das Abtriebsteil 12 ist z.B. eine Kolbenstange, die aus einem Gehäuse 14 der Antriebseinheit 11 bei entsprechender Druckluftbeaufschlagung bzw. Entlüftung aus dem Gehäuse 14 ausfährt bzw. in dieses einfährt. Das Abtriebsteil 12 ist an einem Kolben 15 angeordnet, der in dem Gehäuse 14 in einer Längsrichtung 16 hin und her beweglich ist. Der Kolben 15 unterteilt eine Kammer 17 im Gehäuse 14 in Arbeitskammern 18, 19, die mittels einer Steuerventilanordnung 20 mit Druck beaufschlagbar bzw. entlüftbar sind. Die Steuerventilanordnung 20, beispielsweise ein 4/2-Wegeventil, ist mit einer Druckluftquelle 21 sowie über Leitungen 22, 23 mit den Arbeitskammern 18, 19 verbunden. Wenn die Steuerventilanordnung 20 die Arbeitskammer 18 mit Druckluft beaufschlagt und die Arbeitskammer 19 entlüftet, fährt das Abtriebsteil 12 in das Gehäuse 14 ein, bei Druckluftbeaufschlagung der Arbeitskammer 19 und Entlüftung der Arbeitskammer 18 aus dem Gehäuse 14 aus. Die am freien Ende des Abtriebsteils 12 befestigte Saugvorrichtung 13 führt eine entsprechende Längsbewegung in Längsrichtung 16 durch.

Die Saugvorrichtung 13 dient zum Anheben bzw. Ablegen von Gegenständen, zum Beispiel eines plattenartigen Gegenstandes 24. Die Saugvorrichtung 13, die man auch als Vakuumsauger bezeichnen kann, enthält eine Unterdruckerzeugungseinrichtung 25 mit einem elektrischen Lineardirektantrieb 26 zur Erzeugung von Unterdruck in einem Ansaugbereich 27 eines Haltekopfes 28.

Der Haltekopf 28, der vorzugsweise aus flexiblem, insbesondere elastischem Material, zum Beispiel Kunststoff, Gummi oder dergleichen, besteht, ist an der Unterseite eines Gehäuses 29 der Saugvorrichtung 13 angeordnet, beispielsweise angeschraubt, angeklebt, angeklemmt oder dergleichen. Im Gehäuse 29 ist eine Unterdruckkammer oder Arbeitskammer 30 ausgebildet. Die Unterdruckkammer 30 wird oben von einem als Arbeitskolben oder Druckkolben 31 ausgestalteten, entlang der Achse 36 beweglichen Läufer 32 des Lineardirektantriebs 26, seitlich von dem Gehäuse 29 und unterseitig durch den Haltekopf 28 begrenzt. Die Unterdruckkammer 30 ist über einen Verbindungskanal 33 fluidtechnisch mit dem Ansaugbereich 27 verbunden. Der Verbindungskanal 33 ist an der Oberseite des Haltekopfs 28 ausgebildet. Ferner befindet sich am Außenumfang des Druckkolbens 31 eine Dichtung 40, die an einer Innenwand 41 des Gehäuses 29 anliegt.

Der Haltekopf 28 weist eine an das Gehäuse 29 z.B. angeschraubte oder angeklebte Montageplatte 34, beispielsweise aus Metall oder hartem Kunststoff, sowie einen flexiblen Fuß oder Schuh 35 auf, der in Gebrauchsstellung auf dem Gegenstand 24 aufliegt und mit diesem eine im Wesentlichen druckdichte Verbindung bildet.

Die Unterdruckerzeugungseinrichtung 25 und der Haltekopf 28 sind beim Ausführungsbeispiel in axialer Richtung hintereinander entlang der Bewegungs-Achse 36 des Druckkolbens 31 angeordnet.

Beim Ausführungsbeispiel weist die Saugvorrichtung 13 eine um die Achse 36 im Wesentlichen rotationssymmetrische, beispielsweise zylindrische Gestalt auf, wobei ohne weiteres auch andere geometrische Ausgestaltungen möglich sind.

Der Läufer 32 ist beim Ausführungsbeispiel als Permanentmagnet ausgestaltet bzw. weist eine Permanentmagnetanordnung auf, wobei beispielsweise der magnetische Nordpol N und der magnetische Südpol S des Läufers 32 entsprechend der Achse 36 orientiert sind. Es versteht sich, dass auch andere Polungen prinzipiell möglich sind. Mittels einer Erregermagnetanordnung 37 des Lineardirektantriebes 26 ist der Läufer 31 in Richtung der Achse 36 hin und her bzw. auf und ab bewegbar. Die Erregermagnetanordnung 37 ist beispielsweise in das Gehäuse 29 integriert, beispielsweise zwischen Wandungen des Gehäuses 29 angeordnet.

Die Erregermagnetanordnung 37 enthält mehrere, in Richtung der Achse 36 aneinander gereihte elektrische Spulen 38. Eine Bestromungseinrichtung 39 bestromt die Spulen 38 derart, dass ein magnetisches Wanderfeld entsteht. Durch dieses magnetische Wanderfeld wird der Läufer 32 in Achsrichtung 36 hin und her bzw. auf und ab bewegt.

Bei einer Bewegung des Arbeits- bzw. Druckkolbens 31 von dem Haltekopf 28 weg wird das Volumen der Unterdruckkammer 30 vergrößert. Wenn der Haltekopf 28 dabei auf dem Gegenstand 24 aufliegt, bildet sich eine im Wesentlichen druckdichte Verbindung zwischen dem Gegenstand 24 und dem flexiblen Schuh 35 des Haltekopfes 28 aus. Dementsprechend ist die Unterdruckkammer 30 im Wesentlichen druckdicht geschlossen, wenn der Haltekopf 28 auf dem Gegenstand 24 aufsitzt. Wenn sich dann der Druckkolben 31 bzw. Läufer 32 nach oben bewegt und das Volumen der Unterdruckkammer 30 vergrößert wird, bildet sich ein Unterdruck im Bereich der Unterdruckkammer 30 und somit auch im Ansaugbereich 27 aus. Der Gegenstand 24 wird dann angesaugt. Bei entsprechend umgekehrter Bestromung der Erregermagnetanordnung 37 bewegt sich der Läufer 32 nach unten, wobei das Volumen in der Unterdruckkammer 30 wieder verkleinert wird. Der Unterdruck in der Unterdruckkammer 30 und dem Ansaugbereich 27 nimmt ab, bis schließlich ausgeglichene Druckverhältnisse eintreten, bei denen der Gegenstand 24 vom Haltekopf 28 bzw. der Saugvorrichtung 13 freigegeben wird. Besonders bevorzugt ist es, dass der Läufer 32 mit verhältnismäßig großer Geschwindigkeit in Richtung des Haltekopfs 28 bewegt wird, sodass der Gegenstand 24 von der Saugvorrichtung 13 sozusagen abgestoßen oder weggestoßen wird.

Bei seiner Bewegung vom Haltekopf 28 weg, in der Zeichnung nach oben, verdrängt der Druckkolben 31 Luft 42 aus einer Abströmkammer 43 des Gehäuses 29 heraus. Die Abströmkammer 43 an der dem Haltekopf 28 abgewandten Seite des Gehäuses 29 weist eine Öffnung 44 auf, die als Auslass zum Abströmen von Luft 42 aus der Abströmkammer 43 dient.

Wenn der Druckkolben 31 zum Haltekopf 28 hin bewegt wird, kann Luft 42 durch die Öffnung 44 in die Abströmkammer 43 hineinströmen. Durch die Öffnung 44 ist eine verhältnismäßig freie Beweglichkeit des Druckkolbens 31 bzw. Läufers 32 gegeben.

Es versteht sich, dass auch Varianten von erfindungsgemäßen Saugvorrichtungen möglich sind, bei denen eine geschlossene Kammer an der Stelle der Abströmkammer 43 vorhanden ist, die dann eine Art Luftpuffer bildet. Der Druckkolben komprimiert in einem solchen Fall die in der geschlossenen Kammer befindliche Luft, sodass die Bewegung in Richtung vom Haltekopf weg gebremst wird.

Eine zentrale Steuerung 45 steuert die Positionier-Antriebseinheit 11 und die Saugvorrichtung 13. Die Steuerungsvorrichtung 45 sendet beispielsweise über Leitungen 46, 47 Steuerbefehle an einen Antrieb 48 der Steuerventilanordnung 20 und an eine lokale Steuereinrichtung 50 zur Steuerung der Saugvorrichtung 13.

Die lokale Steuereinrichtung 50 ist vorzugsweise in die Baueinheit der Saugvorrichtung 13 integriert. Es sind auch Bauformen möglich, bei denen die Steuereinrichtung 50 eine von der Saugvorrichtung 13 abgesetzte Baueinheit bildet, wie beispielsweise in Fig. 2 dargestellt. Ferner ist es möglich, dass die Funktionen der Steuereinrichtung 50 beispielsweise von einer zentralen Steuerungsvorrichtung in der Art der Steuerungsvorrichtung 45 übernommen werden.

Eine Regelungseinrichtung 51 dient zur Positions- und Kraftregelung des Läufers 32 bzw. Druckkolbens 31. Die Regelungseinrichtung 51 kooperiert mit der Bestromungseinrichtung 39, die beispielsweise einen elektronischen Kommutator, einen Stromrichter oder dergleichen enthält. Die Regelungseinrichtung 51 erhält von der Bestromungseinrichtung 39 Positionssignale, die z.B. jeweilige Position des Läufers 31 relativ zum Haltekopf 28 signalisieren. Ferner erhält die Regelungseinrichtung 51 von einem Drucksensor 52 Druck-Messsignale 53, die die Drucksituation im Bereich der Unterdruckkammer 30 bzw. des Ansaugbereichs 27 charakterisieren. Der Drucksensor 52 ist beispielsweise im Bereich des Verbindungskanals 53 angeordnet. Der Drucksensor 52 meldet die Druck-Messsignale 53 über eine Leitung 54 an die Steuereinrichtung 50.

Eine andere Position des Drucksensors 52 ist jederzeit möglich, beispielsweise im Bereich der Innenwand 41. Es ist gegebenenfalls eine versenkte Bauweise des Drucksensors 52 erforderlich, um ihn vor Beschädigung durch den Läufer 32 oder den anzusaugenden Gegenstand 24 zu schützen.

Die Regelungseinrichtung 51 empfängt beispielsweise über eine Schnittstelle 55 einen Steuerbefehl 56 zum Ansaugen des Gegenstandes 24. In dem Steuerbefehl 56 ist eine gewünschte Ansaugkraft angegeben. Die Regelungseinrichtung 51 steuert dann den Lineardirektantrieb 26 zur Einstellung der gewünschten Ansaugkraft an, das heißt, sie gibt der Bestromungseinrichtung 39 Steuerbefehle zur Bestromung der Erregermagnetanordnung 37 derart, dass der Läufer 32 vom Haltekopf 28 weg, also nach oben, bewegt wird. Wenn der Drucksensor 52 signalisiert, dass ein zu der vorgegebenen Ansaugkraft korrelierender Ansaug-Unterdruck erreicht ist, gibt die Regelungseinrichtung 51 der Bestromungseinrichtung 39 vor, den Läufer 32 in der dann erreichten Längsposition relativ zum Haltekopf 28 anzuhalten.

Nun kann es aber vorkommen, dass beispielsweise durch Undichtigkeiten im Bereich des flexiblen Schuhs 39, beispielsweise am Übergangsbereich zum Gegenstand 24, Luft in den Ansaugbereich 27 einströmt. Der Unterdruck im Bereich der Unterdruckkammer 30 bzw. dem Ansaugbereich 27 nimmt dann ab, sodass der Gegenstand 24 an sich nicht mehr mit der gewünschten Ansaugkraft von der Saugvorrichtung 13 gehalten werden kann. Der Drucksensor 52 meldet den abnehmenden Unterdruck an die Regelungseinrichtung 51, die infolgedessen die Bestromungseinrichtung 39 zu einer weiteren Verlagerung des Läufers 32 vom Haltekopf 28 weg, nach oben, ansteuert, bis der gewünschte Ansaug-Unterdruck bzw. die gewünschte Ansaugkraft wieder erreicht ist. Auf diese Weise regelt die Regelungseinrichtung 51 den Lineardirektantrieb 26 derart, dass ein im Wesentlichen konstanter Ansaug-Unterdruck bzw. eine im Wesentlichen konstante Ansaugkraft beim Ansaugen des Gegenstands 24 vorhanden ist. Es versteht sich, dass die Nachregelung durch die Regelungseinrichtung 51 durch den als oberer Anschlag für den Läufer 32 dienenden oberen Gehäusedeckel 58 des Gehäuses 29 begrenzt ist.

Die erfindungsgemäße Saugvorrichtung kann, wie bereits erläutert, sehr kompakt bauen. Die von der Saugvorrichtung bereitgestellte Ansaugkraft hängt unter anderem von der Fläche des Druckkolbens 31 ab und beträgt beispielsweise bei einer Fläche von ca. 78 mm² und bei einem Unterdruck von 0,20 bar im Verhältnis zur Umgebung 1,57 N. Bei einem kreisrunden Druckkolben 31 wäre dessen Durchmesser dann 10 mm. Vergrößert man den Kolbendurchmesser des Druckkolbens 31 bzw. dessen Fläche auf 16 mm bzw. 201 mm², ist bei gleichem Unterdruck von 0,2 bar eine Ansaugkraft von ungefähr 4 N möglich. Wenn man den Unterdruck weiter vergrößert, beispielsweise auf 0,9 bar, beträgt die Ansaugkraft etwa 18 N.

Es versteht sich, dass Abwandlungen der Erfindung ohne weiteres möglich sind. Beispielsweise können mehrere Ventilkanäle zwischen der Unterdruckkammer 30 und dem Ansaugbereich 27 vorgesehen sein. Die Elastizität des Haltekopfs 28, dessen geometrische Form oder dergleichen können an die jeweils aufzunehmenden Gegenstände optimal angepasst sein.

Eine erfindungsgemäße Saugvorrichtung kann auch mehrere Halteköpfe aufweisen, die mit der jeweiligen durch den Lineardirektantrieb volumenveränderlichen Unterdruckkammer durch entsprechende Verbindungskanäle fluidtechnisch verbunden sind.

## Patentansprüche

1. Saugvorrichtung mit mindestens einem mit Unterdruck beaufschlagbaren Haltekopf (28) und mit einer Unterdruckerzeugungseinrichtung (25) zum Erzeugen des Unterdruckes in einem Ansaugbereich (27) des mindestens einen Haltekopfs (28), wobei ein Gegenstand (24) durch den Unterdruck an den mindestens einen Haltekopf (28) angesaugt wird, wobei die Unterdruckerzeugungseinrichtung (25) einen elektrischen Lineardirektantrieb (26) zur Erzeugung des Unterdrucks aufweist, und wobei ein Läufer (32) einen relativ zu dem mindestens einen Haltekopf (28) beweglichen Druckkolben (31) zur Erzeugung des Unterdrucks bildet, **dadurch gekennzeichnet, dass** der Lineardirektantrieb (26) eine Erreger-Spulenanordnung mit mehreren entsprechend der Bewegungsrichtung des Läufers (32) des Lineardirektantriebs (26) aneinandergereihten Spulen aufweist.

2. Saugvorrichtung nach Anspruch 1, **dadurch gekennzeichnet, dass** der mindestens eine Haltekopf (28) und die Unterdruckerzeugungseinrichtung (25) axial hintereinander angeordnet sind.

3. Saugvorrichtung nach Anspruch 1 oder 2, **dadurch gekennzeichnet, dass** der mindestens eine Haltekopf (28) eine Unterdruckkammer (30) der Unterdruckerzeugungseinrichtung (25) begrenzt, wenn er einen Gegenstand (24) ansaugt.

4. Saugvorrichtung nach einem der vorhergehenden Ansprüche, **dadurch gekennzeichnet, dass** der Läufer (32) zur Vergrößerung bzw. Verkleinerung des Volumens der Unterdruckkammer (30) vorgesehen ist.

5. Saugvorrichtung nach einem der vorhergehenden Ansprüche, **dadurch gekennzeichnet, dass** die Unterdruckerzeugungseinrichtung (25) und der mindestens eine Haltekopf (28) eine Baueinheit bilden.

6. Saugvorrichtung nach einem der vorhergehenden Ansprüche, **dadurch gekennzeichnet, dass** der Läufer (32) in Richtung in zwei einander entgegengesetzten Richtungen antreibbar ist, wobei er einer Bewegung in einer ersten Richtung Unterdruck im Ansaugbereich (27) des mindestens einen Haltekopfs (28) erzeugt und bei einer der ersten Bewegung entgegengesetzten Bewegung in einer zweiten Richtung ausgeglichene Druckverhältnisse oder Überdruck im Ansaugbereich (27) des mindestens einen Haltekopfs (28) erzeugt, so dass ein durch den mindestens einen Haltekopf (28) angesaugter Gegenstand (24) freigegeben bzw. vom Haltekopf (28) abgestoßen wird.

7. Saugvorrichtung nach einem der vorhergehenden Ansprüche, **dadurch gekennzeichnet, dass** die Unterdruckerzeugungseinrichtung (25) einen Auslass (44) zum Ausstoßen von Druckluft beim Erzeugen von Unterdruck auf Seiten des mindestens einen Haltekopfs (28) aufweist.

8. Saugvorrichtung nach einem der vorhergehenden Ansprüche, **dadurch gekennzeichnet, dass** sie mindestens einen Verbindungskanal (33) zur Verbindung einer Unterdruckkammer (30) der Unterdruckerzeugungseinrichtung (25) mit einem Ansaugbereich (27) des mindestens einen Haltekopfs (28) aufweist.

9. Saugvorrichtung nach einem der vorhergehenden Ansprüche, **dadurch gekennzeichnet, dass** der Läufer (32) durch einen Permanentmagnet gebildet wird oder eine Permanentmagnetanordnung aufweist.

10. Saugvorrichtung nach einem der vorhergehenden Ansprüche, **dadurch gekennzeichnet, dass** dem Lineardirektantrieb (26) eine insbesondere in die Saugvorrichtung (13) integrierte Steuereinrichtung (50) zugeordnet ist.

11. Saugvorrichtung nach Anspruch 10, **dadurch gekennzeichnet, dass** die Steuereinrichtung (50) eine insbesondere zur Kraftregelung ausgestaltete Regelungseinrichtung (51) enthält.

12. Saugvorrichtung nach Anspruch 11, **dadurch gekennzeichnet, dass** die Regelungseinrichtung (51) zur Ansteuerung des Lineardirektantriebs (26) zum Ausgleich einer Leckage im Bereich des Haltekopfes (28) ausgestaltet ist.

13. Saugvorrichtung nach einem der vorhergehenden Ansprüche, **dadurch gekennzeichnet, dass** sie mindestens einen Drucksensor (52) zur Erfassung des Drucks im Ansaugbereich (27) des mindestens einen Haltekopfs (28) aufweist.

14. Saugvorrichtung nach einem der vorhergehenden Ansprüche, **dadurch gekennzeichnet, dass** der mindestens eine Haltekopf (28) zumindest teilweise aus flexiblem Material ist.

15. Saugvorrichtung nach einem der vorhergehenden Ansprüche, **dadurch gekennzeichnet, dass** der mindestens eine Haltekopf (28) auswechselbar ist.

16. Handhabungsvorrichtung mit mindestens einer Saugvorrichtung (13) nach einem der vorhergehenden Ansprüche und mindestens einem Linear- und/oder mindestens einem Rotationsantrieb zur Positionierung der mindestens einen Saugvorrichtung (13).

## Claims

1. Suction device with at least one holding head (28) to which a vacuum can be applied and with a vacuum generating unit (25) for the generation of the vacuum in a suction region (27) of the at least one holding head (28), wherein an object (24) is drawn to the at least one holding head (28) by the vacuum, wherein the vacuum generating unit (25) comprises an electric direct linear drive (26) for the generation of the vacuum and wherein an armature (32) forms a plunger (31) movable relative to the at least one holding head (28) for the generation of the vacuum, **characterised in that** the direct linear drive (26) comprises an excitation coil arrangement with a plurality of coils lined up in accordance with the direction of movement of the armature (32) of the direct linear drive (26).

2. Suction device according to claim 1, **characterised in that** the at least one holding head (28) and the vacuum generating unit (25) are arranged one behind the other in the axial direction.

3. Suction device according to claim 1 or 2, **characterised in that** the at least one holding head (28) bounds a vacuum chamber (30) of the vacuum generating unit (25) when drawing an object (24) towards it.

4. Suction device according to any of the preceding claims, **characterised in that** the armature (32) is provided to increase or reduce the volume of the vacuum chamber (30).

5. Suction device according to any of the preceding claims, **characterised in that** the vacuum generating unit (25) and the at least one holding head (28) form an assembly.

6. Suction device according to any of the preceding claims, **characterised in that** the armature (32) is capable of being driven in two opposite directions, wherein, when moving in a first direction, it generates a vacuum in the suction region (27) of the at least one holding head (28), and wherein, when moving in a second direction opposed to the first movement, it generates a pressure balance or a positive pressure in the suction region (27) of the at least one holding head (28), so that an object (24) drawn by the at least one holding head (28) is released or repelled by the holding head (28).

7. Suction device according to any of the preceding claims, **characterised in that** the vacuum generating unit (25) has an outlet (44) for the expulsion of compressed air while generating a vacuum on the side of the at least one holding head (28).

8. Suction device according to any of the preceding claims, **characterised in that** it is provided with at least one connecting passage (33) for connecting a vacuum chamber (30) of the vacuum generating unit (25) to a suction region (27) of the at least one holding head (28).

9. Suction device according to any of the preceding claims, **characterised in that** the armature (32) is represented by a permanent magnet or comprises a permanent magnet arrangement. '

10. Suction device according to any of the preceding claims, **characterised in that** a control unit (50) which is in particular integrated into the suction device (13) is assigned to the direct linear drive (26).

11. Suction device according to claim 10, **characterised in that** the control unit (50) comprises a control device (51) for automatic power control.

12. Suction device according to claim 11, **characterised in that** the control device (51) is designed for the control of the direct linear drive (26) to compensate for a leakage in the region of the holding head (28).

13. Suction device according to any of the preceding claims, **characterised in that** it is provided with at least one pressure sensor (52) for sensing the pressure in the suction region (27) of the at least one holding head (28).

14. Suction device according to any of the preceding claims, **characterised in that** the at least one holding head (28) is at least partially made of a flexible material.

15. Suction device according to any of the preceding claims, **characterised in that** the at least one holding head (28) is replaceable.

16. Handling device with at least one suction device (13) according to any of the preceding claims and with at least one linear drive and/or at least one rotary actuator for positioning the at least one section device (13).

## Revendications

1. Dispositif d'aspiration avec au moins une tête de maintien (28) pouvant être sollicitée par une dépression et avec un dispositif (25) producteur de dépression pour produire la dépression dans une zone d'aspiration (27) de la tête de maintien (28) au nombre d'au moins une, un objet (24) étant aspiré par la dépression contre la tête de maintien (28) au nombre d'au moins une, dans lequel le dispositif (25) producteur de dépression présente un entraînement linéaire direct (26) électrique pour produire la dépression et dans lequel un induit (32) forme un piston de compression (31) mobile par rapport à la tête de maintien (28) au nombre d'au moins une pour produire la dépression, **caractérisé en ce que** l'entraînement linéaire direct (26) présente un système de bobines excitatrices avec plusieurs bobines juxtaposées dans la direction de déplacement de l'induit (32) de l'entraînement linéaire direct (26).

2. Dispositif d'aspiration selon la revendication 1, **caractérisé en ce que** la tête de maintien (28) au nombre d'au moins une et le dispositif producteur de dépression (25) sont placés l'un derrière l'autre axialement.

3. Dispositif d'aspiration selon la revendication 1 ou 2, **caractérisé en ce que** la tête de maintien (28) au nombre d'au moins une délimite une chambre de dépression (30) du dispositif (25) producteur de dépression quand elle aspire un objet (24).

4. Dispositif d'aspiration selon l'une des revendications précédentes, **caractérisé en ce que** l'induit (32) est prévu pour augmenter ou réduire le volume de la chambre de dépression (30).

5. Dispositif d'aspiration selon l'une des revendications précédentes, **caractérisé en ce que** le dispositif (25) producteur de dépression et la tête de maintien (28) au nombre d'au moins une forment un ensemble constructif.

6. Dispositif d'aspiration selon l'une des revendications précédentes, **caractérisé en ce que** l'induit (32) peut être entraîné dans deux directions mutuellement opposées, produisant alors une dépression dans la zone d'aspiration (27) de la tête de maintien (28) au nombre d'au moins une lors d'un mouvement dans une première direction et, lors d'un mouvement dans une deuxième direction opposée à la première direction, crée des conditions de pression équilibrées ou une surpression dans la zone d'aspiration (27) de la tête de maintien (28) au nombre d'au moins une de sorte qu'un objet (24) aspiré par la tête de maintien (28) au nombre d'au moins une est libéré resp. repoussé de la tête de maintien (28).

7. Dispositif d'aspiration selon l'une des revendications précédentes, **caractérisé en ce que** le dispositif (25) producteur de dépression présente une sortie (44) pour rejeter de l'air comprimé lors de la production d'une dépression du côté de la tête de maintien (28) au nombre d'au moins une.

8. Dispositif d'aspiration selon l'une des revendications précédentes, **caractérisé en ce qu'**il présente au moins un canal de jonction (33) pour relier une chambre de dépression (30) du dispositif producteur de dépression (25) à une zone d'aspiration (27) de la tête de maintien (28) au nombre d'au moins une.

9. Dispositif d'aspiration selon l'une des revendications précédentes, **caractérisé en ce que** l'induit (32) est formé par un aimant permanent ou présente un système d'aimants permanents.

10. Dispositif d'aspiration selon l'une des revendications précédentes, **caractérisé en ce qu'**à l'entraînement direct linéaire (26) est associé un dispositif de commande (50) en particulier intégré au dispositif d'aspiration (13).

11. Dispositif d'aspiration selon la revendication 10, **caractérisé en ce que** le dispositif de commande (50) comprend un dispositif de régulation (51) conçu en particulier pour une régulation de force.

12. Dispositif d'aspiration selon la revendication 11, **caractérisé en ce que** le dispositif de régulation (51) est conçu pour commander l'entraînement direct linéaire (26) en vue de compenser une fuite au niveau de la tête de maintien (28).

13. Dispositif d'aspiration selon l'une des revendications précédentes, **caractérisé en ce qu'**il présente au moins un capteur de pression (52) pour détecter la pression dans la zone d'aspiration (27) de la tête de maintien (28) au nombre d'au moins une.

14. Dispositif d'aspiration selon l'une des revendications précédentes, **caractérisé en ce que** la tête de maintien (28) au nombre d'au moins une est constituée au moins partiellement d'un matériau flexible.

15. Dispositif d'aspiration selon l'une des revendications précédentes, **caractérisé en ce que** la tête de maintien (28) au nombre d'au moins une est interchangeable.

16. Dispositif de manipulation avec au moins un dispositif d'aspiration (13) selon l'une des revendications précédentes et au moins un entraînement linéaire et/ou au moins un entraînement rotatif pour le positionnement du dispositif d'aspiration (13) au nombre d'au moins un.
